# EUROPÄISCHE PATENTSCHRIFT

(11) **EP 2 958 781 B1**
(45) Veröffentlichungstag und Bekanntmachung des Hinweises auf die Patenterteilung: **31.05.2017**
(21) Anmeldenummer: 14719255.3
(22) Anmeldetag: 15.04.2014
(51) Int. Cl.: B60T 17/00, B61D 27/00

(54) **VORRICHTUNG UND VERFAHREN ZUM TROCKNEN VON LUFT SOWIE SCHIENENFAHRZEUG MIT EINER DERARTIGEN VORRICHTUNG**
APPARATUS AND METHOD FOR DRYING DRYING AIR AND RAILWAY VEHICLE WITH SUCH AN APPARATUS
DISPOSITIF ET PROCÉDÉ POUR SÉCHER DE L'AIR ET VÉHICULE FERROVIAIRE AVEC UN TEL DISPOSITIF

(30) Priorität: 25.04.2013 DE 102013207570
(43) Veröffentlichungstag der Anmeldung: 30.12.2015
(73) Patentinhaber: Siemens Aktiengesellschaft, 80333 München (DE)
(72) Erfinder: MAUDER, Mike, 06842 Dessau-Roßlau (DE); SCHMITT, Volker, 91052 Erlangen (DE)
(86) Internationale Anmeldenummer: PCT/EP2014/057618
(87) Internationale Veröffentlichungsnummer: WO 2014/173729

(56) Entgegenhaltungen:
- EP-A1- 2 123 343
- DE-A1- 3 533 893
- DE-C5- 19 617 829

## Beschreibung

Die Erfindung betrifft Anordnung zum Trocknen von Luft, insbesondere für eine Druckluftanlage eines Schienenfahrzeugs, mit einem Lufttrockner, der einen Lufttrocknereingang zur Aufnahme der zu trocknenden Luft, zumindest eine Trocknungskammer und ein an die Trocknungskammer angeschlossenes Luftleitungssystem zum Leiten mittels der Trocknungskammer getrockneter Luft aufweist, wobei das Luftleitungssystem zumindest zwei jeweils mit einer Regenerationsdüse versehene parallel geschaltete Regenerationsleitungsabschnitte aufweist, in einem derer in Reihe zu der Regenerationsdüse ein Schaltmittel zum bedarfsweisen Zu- und Abschalten des einen Regenerationsleitungsabschnittes angeordnet ist.

Die Erfindung betrifft weiterhin ein Schienenfahrzeug mit einer derartigen Anordnung.

Ferner betrifft die Erfindung ein Verfahren zum Trocknen von Luft, insbesondere zur Anwendung bei einer Druckluftanlage eines Schienenfahrzeugs, bei dem ein Lufttrockner bereitgestellt wird, der einen Lufttrocknereingang zur Aufnahme der zu trocknenden Luft, zumindest eine Trocknungskammer und ein an die Trocknungskammer angeschlossenes Luftleitungssystem zum Leiten mittels der Trocknungskammer getrockneter Luft aufweist, wobei das Luftleitungssystem zumindest zwei jeweils mit einer Regenerationsdüse versehene parallel geschaltete Regenerationsleitungsabschnitte aufweist, in einem derer in Reihe zu der Regenerationsdüse ein Schaltmittel angeordnet ist, und bei dem mittels des Schaltmittels der eine Regenerationsleitungsabschnitt bedarfsweisen zu- und abgeschaltet wird.

Eine derartige Anordnung, ein derartiges Schienenfahrzeug und ein derartiges Verfahren sind aus der Patentschrift DE 196 17 829 C5 bekannt. Bei der bekannten Anordnung erfolgt das Zu- und Abschalten einer der Regenerationsdüsen, das eine bedarfsabhängige Regeneration der dort gezeigten zwei Trocknungskammern ermöglicht, in Abhängigkeit des Druckes der getrockneten Luft (Druckluft), so dass diese Vorrichtung insbesondere für den Anschluss zweier Kompressoren optimiert ist.

Der Erfindung liegt die Aufgabe zu Grunde eine Anordnung der eingangs genannten Art, ein Schienenfahrzeug mit einer derartigen Anordnung und ein Verfahren der eingangs genannten Art bereit zu stellen, die hinsichtlich äußerer Bedingungen optimiert sind, die im Bereich eines zu befahrenen schienengebundenen Verkehrsweges vorherrschen.

Zur Lösung dieser Aufgabe schlägt die Erfindung eine Anordnung mit den Merkmalen des Anspruches 1 und ein Schienenfahrzeug mit einer derartigen Anordnung gemäß Anspruch 7 vor, bei denen eine Steuereinrichtung geeignet ausgebildet ist, das Schaltmittel in Abhängigkeit des Betriebszustandes einer Klimaanlage zu steuern.

Ferner schlägt die Erfindung zur Lösung dieser Aufgabe ein Verfahren mit den Merkmalen des Anspruches 8 vor, bei dem eine Steuereinrichtung das Schaltmittel in Abhängigkeit des Betriebszustandes einer Klimaanlage steuert.

Bei der erfindungsgemäßen Anordnung, dem erfindungsgemäßen Schienenfahrzeug und dem erfindungsgemäßen Verfahren wird in besonders vorteilhafter Weise der Betriebszustand einer Klimaanlage zur Beurteilung der Bedingungen, die im Bereich eines zu befahrenen schienengebundenen Verkehrsweges vorherrschen, heran gezogen und als Parameter genutzt, in Abhängigkeit dessen dann mittels der Steuereinrichtung die Steuerung der Schaltmittel - also das bedarfsabhängige Zu- und Abschalten der einen der Regenerationsdüsen - erfolgt. Die erfindungsgemäße Anordnung, das erfindungsgemäße Schienenfahrzeug und das erfindungsgemäße Verfahren sind insbesondere hinsichtlich eines Einsatzes zu verschiedenen Jahreszeiten und bei verschiedenen Streckenbedingungen, wie beispielsweise zu durchfahrenden langen Tunneln, optimal ausgebildet. Denn der Betrieb zu verschiedenen Jahreszeiten und der Betrieb unter verschiedenen Streckenbedingungen gehen mit starken Schwankungen von Lufttemperatur und Luftfeuchtigkeit einher. Die Erfindung nutzt in vorteilhafter Weise die Auswirkungen dieser Schwankungen auf den Betriebszustand einer Klimaanlage zur Steuerung des Schaltmittels. Somit ist sichergestellt, dass zu den verschiedenen Jahreszeiten und unter verschiedenen Streckenbedingungen jeweils so wenig wie möglich der getrockneten Luft zur Regeneration der zumindest einen Trocknungskammer verbraucht wird.

Es wird als vorteilhaft angesehen, wenn ein Klimaanlagenausgang der Klimaanlage, an dem Luft bereitgestellt ist, die bei laufender Klimaanlage gekühlt und bei nicht laufender Klimaanlage ungekühlt ist, über einen Luftpfad derart mit dem Lufttrocknereingang verbunden ist, dass zumindest ein Teil der von der Klimaanlage bereitgestellten Luft die zu trocknende Luft bildet.

Es wird weiterhin als vorteilhaft angesehen, wenn eine Sensoreinrichtung geeignet ausgebildet ist, dem Betriebszustand der Klimaanlage entsprechende Messwerte zu erfassen und über eine erste Wirkverbindung als Ausgangssignal an die Steuereinrichtung auszugeben, und wenn die Steuereinrichtung geeignet ausgebildet ist, zur Steuerung des Schaltmittels ein von dem Ausgangssignal abhängiges Steuersignal über eine zweite Wirkverbindung an das Schaltmittel auszugeben.

Ferner wird es als vorteilhaft angesehen, wenn das Luftleitungssystem an eine zweite Trocknungskammer angeschlossen ist, wobei die beiden Trocknungskammern mittels eines weiteren Schaltmittels wechselweise in eine Trocknungs- und eine Regenerationsphase schaltbar sind.

Vorteilhaft ist es weiterhin, wenn die Steuereinrichtung das Steuersignal anhand des Ausgangssignals mittels einer rechnerbasierten Auswertelogik ermittelt.

Außerdem ist es vorteilhaft, wenn die Sensoreinrichtung zumindest einen den Betriebszustand der Klimaanlage erfassenden Sensor aufweist.

Die Schaltmittel sind vorzugsweise als Magnetventile ausgebildet.

Zur weiteren Erläuterung der Erfindung ist in
- Figur 1: schematisch ein erstes Ausführungsbeispiel eines erfindungsgemäßen Schienenfahrzeugs mit einer ersten Ausführungsform einer erfindungsgemäßen Anordnung zum Trocknen von Luft und in
- Figur 2: schematisch ein zweites Ausführungsbeispiel des erfindungsgemäßen Schienenfahrzeugs mit einer zweiten Ausführungsform der erfindungsgemäßen Anordnung zum Trocknen von Luft gezeigt.

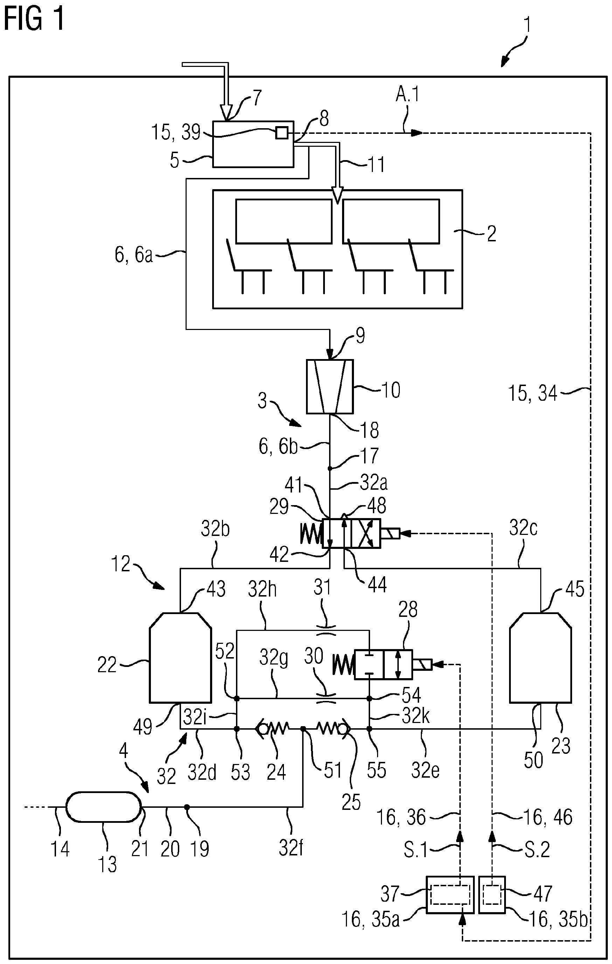

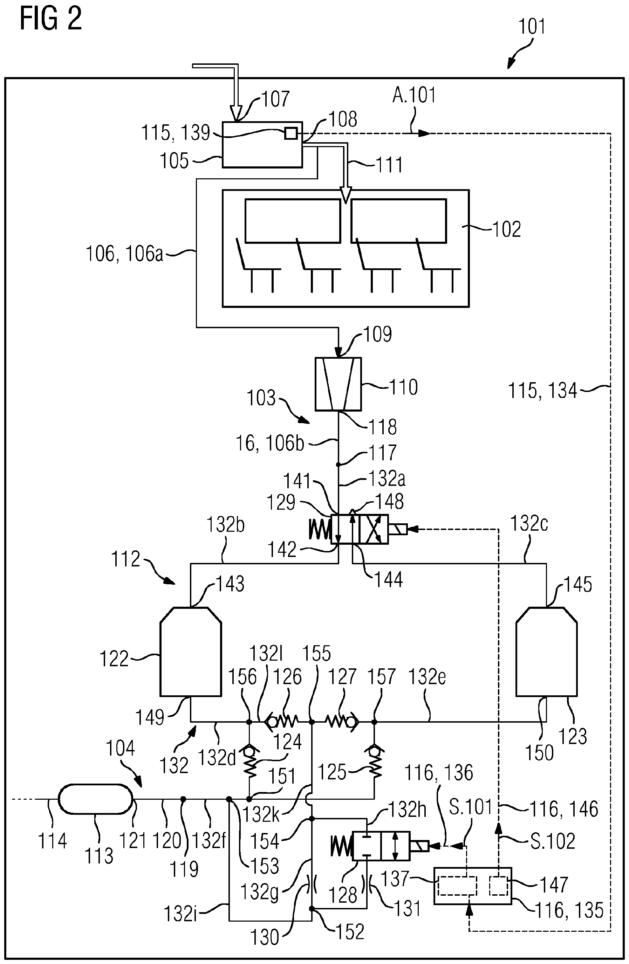

Die Figuren 1 und 2 zeigen in schematischer Darstellung ein Schienenfahrzeug 1; 101 mit einem Fahrgastinnenraum 2; 102 und jeweils einer ersten Ausführungsform 3; 103 der erfindungsgemäßen Anordnung zum Trocknen von Luft. Beide Ausführungsformen 3; 103 der erfindungsgemäßen Anordnung zum Trocknen von Luft umfassen jeweils eine als Ganzes mit 4; 104 bezeichnete Druckluftanlage sowie eine Klimaanlage 5; 105. Mittels der Klimaanlage 5; 105 wird der Druckluftanlage 4; 104 über einen Luftpfad 6; 106 zu trocknende Luft bereitgestellt. Über einen Klimaanlageneingang 7; 107 wird der Klimaanlage zu kühlende Luft aus der Atmosphäre zugeführt. Ein als Luftleitung 6a; 106a ausgebildeter Abschnitt des Luftpfades 6; 106 verbindet einen Klimaanlagenausgang 8; 108 mit einem Kompressoreingang 9; 109 eines Kompressors 10; 110 der Druckluftanlage, um einen Teil der von der Klimaanlage bereitgestellten Luft zu dem Kompressoreingang zu führen. Über einen weiteren an den Klimaanlagenausgang angeschlossenen Luftpfad 11; 111 wird ein weiterer Teil der von der Klimaanlage bereitgestellten Luft in den Fahrgastinnenraum 2; 102 geführt. Die an dem Klimaanlagenausgang der Klimaanlage bereitgestellte Luft ist bei laufender Klimaanlage gekühlt und bei nicht laufender Klimaanlage ungekühlt.

Von der Druckluftanlage 4; 104 sind bei den beiden Ausführungsformen 3; 103 der erfindungsgemäßen Anordnung jeweils neben dem Kompressor 10; 110 insbesondere ein als Ganzes mit 12; 112 bezeichneter Lufttrockner, ein Hautbehälter 13; 113, der eine Hauptluftbehälterleitung 14; 114 speist, eine als Ganzes mit 15; 115 bezeichnete Sensoreinrichtung und eine Steuereinrichtung 16; 116 gezeigt.

Dabei ist ein Lufttrocknereingang 17; 117 des Lufttrockners 12; 112 über einen weiteren als Luftleitung 6b; 106b ausgebildeter Abschnitt des Luftpfades 6; 106 an einen Kompressorausgang 18; 118 des Kompressors 10; 110 angeschlossen. Außerdem ist ein Lufttrocknerausgang 19; 119 des Lufttrockners 12; 112 über eine Luftleitung 20; 120 an einen Hautbehältereingang 21; 121 des Hautbehälters 13; 113 angeschlossen.

Der Lufttrockner 12; 112 umfasst bei den beiden Ausführungsformen 3; 103 der erfindungsgemäßen Anordnung jeweils zwei in üblicher Weise mit geeignetem Granulat gefüllte Trocknungskammern 22, 23; 122, 123. Außerdem umfasst der Lufttrockner 12; 112 Rückschlagventile 24, 25; 124, 125, 126, 127, zwei Schaltmittel 28, 29; 128, 129 in Form von Magnetventilen und zwei Regenerationsdüsen 30, 31; 130, 131.

Ferner umfasst der Lufttrockner 12; 112 bei den beiden Ausführungsformen 3; 103 der erfindungsgemäßen Anordnung ein als Ganzes mit 32; 132 bezeichnetes Luftleitungssystem, das einerseits zum Einleiten der zu trocknenden Luft in die Trocknungskammern 22, 23; 122, 123 und andererseits zum Leiten mittel der Trocknungskammern getrockneter Luft dient. Dieses Luftleitungssystem 32; 132 umfasst mehrere Leitungsabschnitte 32a, 32b, ..., 32k; 132a, 132b, ..., 132k, 1321. Ein Teil der getrockneten Luft wird dabei zur Regeneration der Trocknungskammern 22, 23; 122, 123 genutzt. Hierzu bilden die beiden mit 32g, 32h; 132g, 132h bezeichneten Leitungsabschnitte, die jeweils mit einer der Regenerationsdüsen 30, 31; 130, 131 versehen und parallel geschaltet sind, Regenerationsleitungsabschnitte. Zum bedarfsweisen Zu- und Abschalten des mit 32h; 132h bezeichneten Regenerationsleitungsabschnitts, ist in diesem Regenerationsleitungsabschnitt in Reihe zu der Regenerationsdüse 31; 131 das mit 28; 128 bezeichnete eine der Schaltmittel angeordnet.

Die Steuereinrichtung 16; 116 ist geeignet ausgebildet, das eine Schaltmittel 28; 128 in Abhängigkeit des Betriebszustandes der Klimaanlage 5; 105 zu steuern. Hierzu erfasst die Sensoreinrichtung 15; 115 dem Betriebszustand der Klimaanlage entsprechende Messwerte und gibt diese über eine erste Wirkverbindung 34; 134 als Ausgangssignal A.1; A.101 an das Steuergerät 35a; 135 der Steuereinrichtung 16; 116 aus. Zur Steuerung des einen Schaltmittels 28; 128 gibt das Steuergerät 35a; 135 der Steuereinrichtung 16; 116 dann ein von dem Ausgangssignal A.1; A.101 abhängiges Steuersignal S.1; S.101 über eine zweite Wirkverbindung 36; 136 an das eine Schaltmittel 28; 128 aus. Dabei ermittelt das Steuergerät 35a; 135 der Steuereinrichtung das Steuersignal S.1; S.101 anhand des Ausgangssignals A.1; A.101 2 mittels einer ersten rechnerbasierten Auswertelogik 37; 137.

Zur Ermittlung des Betriebszustandes der Klimaanlage 5; 105 weist die Sensoreinrichtung 15; 115 einen Sensor 39; 139 auf, der die durch ihn ermittelten Messwerte - deren jeweiliger Wert angibt, ob die Klimaanlage 5; 105 läuft oder nicht läuft - in Form des Ausgangssignals A.1; A.101 ausgibt.

Der mit 32a; 132a bezeichnete Leitungsabschnitt, dessen eine Ende den Lufttrocknereingang 17; 117 bildet, ist mit seinem anderen Ende an einen ersten Anschluss 41; 141 des weiteren Schaltmittels 29; 129 angeschlossen. Der mit 32b; 132b bezeichnete Leitungsabschnitt ist mit einem Ende mit einem zweiten Anschluss 42; 142 des weiteren Schaltmittels 29; 129 und mit seinem anderen Ende mit einem ersten Anschluss 43; 143 der einen Trocknungskammer 22; 122 verbunden. Der mit 32c; 132c bezeichnete Leitungsabschnitt ist mit einem Ende mit einem dritten Anschluss 44; 144 des weiteren Schaltmittels 29; 129 und mit seinem anderen Ende mit einem ersten Anschluss 45; 145 der anderen Trocknungskammer 23; 123 verbunden.

Ein Steuergerät 35b bzw. das Steuergerät 135 der Steuereinrichtung 16; 116 ist geeignet ausgebildet zur Steuerung des weiteren Schaltmittels 29; 129 weitere Steuersignale S.2; S.102 über eine dritte Wirkverbindung 46; 146 an das mit 29; 129 bezeichnete weitere Schaltmittel auszugeben. Mittels der weiteren Steuersignale S.2; S.102 steuert das Steuergerät 35b; 135 der Steuereinrichtung 16; 116 das weitere Schaltmittel 29; 129 derart, dass die beiden Trocknungskammern 22, 23; 122, 123 wechselweise in eine Trocknungs- und eine Regenerationsphase schaltbar sind. Dabei ermittelt das Steuergerät 35b; 135 der Steuereinrichtung 16; 116 die weiteren Steuersignale S.2; S.102 mittels einer weiteren rechnerbasierten Auswertelogik 47; 147, wobei das Umschalten nach einem festen zeitgesteuerten Takt oder in Abhängigkeit der Durchsatzmenge der zu trocknenden Luft - so wie dies beispielsweise bereits aus der Druckschrift EP 0 199 948 B1 bekannt ist - erfolgen kann. Bei der ersten Ausführungsform 3 der erfindungsgemäßen Anordnung ist die rechnerbasierte Auswertelogik 37 Teil des mit 35a bezeichneten Steuergerätes der Steuereinrichtung 16, während die weitere rechnerbasierte Auswertelogik 47 Teil des mit 35b bezeichneten weiteren Steuergerätes der Steuereinrichtung 16 ist. Im Unterschied hierzu sind die beiden rechnerbasierten Auswertelogiken 137, 147 bei der zweiten Ausführungsform der erfindungsgemäßen Anordnung Teil des Steuergerätes 135 der Steuereinrichtung 116.

Der Kompressor 10; 110 fördert Druckluft in den Leitungsabschnitt 32a; 132a, der über das zweite Schaltmittel 29; 129 wechselweise an eine der beiden Trocknungskammern 22, 23; 122, 123 anschließbar ist. Nach den Figuren 1 und 2 befindet sich der Leitungsabschnitt 32a; 132a gerade in Verbindung mit der Trocknungskammer 22; 122. Die jeweils gerade nicht mit dem Leitungsabschnitt verbundene Trocknungskammer - in den Figuren 1 und 2 ist dies die Trocknungskammer 23; 123 - ist durch das zweite Schaltmittel 29; 129 mit einer Entlüftung 48; 148 zur Atmosphäre verbunden. Die Trocknungskammern 22, 23; 122, 123 sind gegenüberliegend zu ihren ersten Anschlüssen 43, 45; 143, 145 mit zweiten Anschlüssen 49, 50; 149, 150 versehen. An den zweiten Anschluss 49; 149 der einen Trocknungskammer 22; 122 ist der mit 32d; 132d bezeichnete Leitungsabschnitt angeschlossen und an den zweiten Anschluss 50; 150 der anderen Trocknungskammer 23; 123 ist der mit 32e; 132e bezeichnete Leitungsabschnitt angeschlossen. Die beiden Leitungsabschnitte 32d, 32e; 132d, 132e münden in einen Abzweigpunkt 51; 151, von dem der mit 32f; 132f bezeichnete Leitungsabschnitt abzweigt. Im Leitungsabschnitt 32d; 132d ist das in Richtung des Abzweigpunktes 51; 151 öffnende Rückschlagventil 24; 124 angeordnet und im Leitungsabschnitt 32e; 132e ist das in Richtung des Abzweigpunktes 51; 151 öffnende Rückschlagventil 25; 125 angeordnet. Das in Richtung des Hautbehälters 10; 110 weisende Ende des Leitungsabschnitts 32f; 132f bildet den Lufttrocknerausgang 19; 119.

Die beiden Ausführungsformen 3; 103 der erfindungsgemäßen Anordnung unterscheiden sich hinsichtlich der Anschaltung der beiden parallel geschalteten Regenerationsleitungsabschnitte 32g, 32h; 132g, 132h, über die mittels der gerade aktiven Trocknungskammer getrocknete Druckluft zu der gerade nicht aktiven Trocknungskammer geführt wird, um diese zu regenerieren.

Bei der in der Figur 1 gezeigten Ausführungsform 3 der erfindungsgemäßen Anordnung wird der jeweils aktiven Trocknungskammer die getrocknete Druckluft zur Regeneration der gerade nicht aktiven Trocknungskammer direkt entnommen. Hierzu ist ein Ende der parallel geschalteten Regenerationsleitungsabschnitte 32g, 32h in einem Abzweigpunkt 52 mit dem mit 32i bezeichneten Leitungsabschnitt verbunden, der in einem Abzweigpunkt 53 von dem Leitungsabschnitt 32d abzweigt. Das andere Ende der parallel geschalteten Regenerationsleitungsabschnitte 32g, 32h ist in einem Abzweigpunkt 54 mit dem mit 32k bezeichneten Leitungsabschnitt verbunden, der in einem Abzweigpunkt 55 von dem Leitungsabschnitt 32e abzweigt.

Bei der in der Figur 2 gezeigten zweiten Ausführungsform 103 der erfindungsgemäßen Anordnung wird - im Unterschied zu der in Figur 1 gezeigten ersten Ausführungsform 3 - getrocknete Druckluft zur Regeneration der gerade nicht aktiven Trocknungskammer dem Leitungsabschnitt 132f entnommen. Hierzu ist ein Ende der parallel geschalteten Regenerationsleitungsabschnitte 132g, 132h in einem Abzweigpunkt 152 mit dem mit 132i bezeichneten Leitungsabschnitt verbunden, der in einem Abzweigpunkt 153 von dem Leitungsabschnitt 132f abzweigt. Das andere Ende der parallel geschalteten Regenerationsleitungsabschnitte 132g, 132h ist in einem Abzweigpunkt 154 mit dem mit 132k bezeichneten Leitungsabschnitt verbunden, der in einem Abzweigpunkt 155 von dem mit 1321 bezeichneten Leitungsabschnitt abzweigt. Der Leitungsabschnitt 1321 zweigt dabei mit einem Ende in einem Abzweigpunkt 156 von dem Leitungsabschnitt 132d und mit dem anderen Ende in einem Abzweigpunkt 157 von dem Leitungsabschnitt 132e ab. In dem Leitungsabschnitt 1321 ist zwischen den beiden Abzweigpunkten 156 und 155 das in Richtung des Abzweigpunktes 156 öffnende Rückschlagventil 126 angeordnet und zwischen den beiden Abzweigpunkten 157 und 155 ist das in Richtung des Abzweigpunktes 157 öffnende Rückschlagventil 127 angeordnet.

## Patentansprüche

1. Anordnung (3; 103) zum Trocknen von Luft, insbesondere für eine Druckluftanlage (4; 104) eines Schienenfahrzeugs (1; 101),
mit einem Lufttrockner(12; 112), der einen Lufttrocknereingang (17; 117) zur Aufnahme der zu trocknenden Luft, zumindest eine Trocknungskammer (22; 122) und ein an die Trocknungskammer angeschlossenes Luftleitungssystem (32; 132) zum Leiten mittels der Trocknungskammer getrockneter Luft aufweist, wobei das Luftleitungssystem zumindest zwei jeweils mit einer Regenerationsdüse (30, 31; 130, 131) versehene parallel geschaltete Regenerationsleitungsabschnitte (32g, 32h; 132g, 132h) aufweist, in einem derer in Reihe zu der Regenerationsdüse ein Schaltmittel (28, 128) zum bedarfsweisen Zu- und Abschalten des einen Regenerationsleitungsabschnittes (32h; 132h) angeordnet ist,
**gekennzeichnet, durch** eine Steuereinrichtung (16; 116), die geeignet ausgebildet ist, das Schaltmittel (28; 128) in Abhängigkeit des Betriebszustandes einer Klimaanlage (5; 105) zu steuern.

2. Anordnung (3; 103) nach Anspruch 1,
**dadurch gekennzeichnet, dass** ein Klimaanlagenausgang (8; 108) der Klimaanlage, an dem Luft bereitgestellt ist, die bei laufender Klimaanlage gekühlt und bei nicht laufender Klimaanlage ungekühlt ist, über einen Luftpfad (6; 106) derart mit dem Lufttrocknereingang (17; 117) verbunden ist, dass zumindest ein Teil der von der Klimaanlage bereitgestellten Luft die zu trocknende Luft bildet.

3. Anordnung (3; 103) nach einem der Ansprüche 1 oder 2, **dadurch gekennzeichnet,**
**dass** eine Sensoreinrichtung (15; 115) geeignet ausgebildet ist, dem Betriebszustand der Klimaanlage entsprechende Messwerte zu erfassen und über eine erste Wirkverbindung (34; 134) als Ausgangssignal (A.1; A.101) an die Steuereinrichtung (16; 116) auszugeben, und
**dass** die Steuereinrichtung (16; 116) geeignet ausgebildet ist, zur Steuerung des Schaltmittels (28; 128) ein von dem Ausgangssignal (A.1; A.101) abhängiges Steuersignal (S.1; S.101) über eine zweite Wirkverbindung (36; 136) an das Schaltmittel (28; 128) auszugeben.

4. Anordnung (3; 103) nach einem der Ansprüche 1 bis 3,
**dadurch gekennzeichnet, dass** das Luftleitungssystem (32; 132) an eine zweite Trocknungskammer (23; 123) angeschlossen ist, wobei die beiden Trocknungskammern (22, 13; 122, 123) mittels eines weiteren Schaltmittels (29; 129) wechselweise in eine Trocknungs- und eine Regenerationsphase schaltbar sind.

5. Anordnung (3; 103) nach einem der Ansprüche 3 oder 4,
**dadurch gekennzeichnet, dass** die Steuereinrichtung (16; 116) das Steuersignal (S.1; S.101) anhand des Ausgangssignals (A.1; A.101) mittels einer rechnerbasierten Auswertelogik (37; 137) ermittelt.

6. Anordnung (3; 103) nach einem der Ansprüche 3 bis 5,
**dadurch gekennzeichnet, dass** die Sensoreinrichtung (15; 115) zumindest einen den Betriebszustand der Klimaanlage (5; 105) erfassenden Sensor (39; 139) aufweist.

7. Schienenfahrzeug (1; 101) mit einer Anordnung (3; 103) zum Trocknen von Luft,
**dadurch gekennzeichnet, dass** die Anordnung (3; 103) nach einem der Ansprüche 1 bis 6 ausgebildet ist.

8. Verfahren zum Trocknen von Luft, insbesondere zur Anwendung bei einer Druckluftanlage (4; 104) eines Schienenfahrzeugs (1; 101),
bei dem ein Lufttrockner (12; 112) bereitgestellt wird, der einen Lufttrocknereingang (17; 117) zur Aufnahme der zu trocknenden Luft zumindest eine Trocknungskammer (22; 122) und ein an die Trocknungskammer angeschlossenes Luftleitungssystem (32; 132) zum Leiten mittels der Trocknungskammer getrockneter Luft aufweist, wobei das Luftleitungssystem zumindest zwei jeweils mit einer Regenerationsdüse (30, 31; 130, 131) versehene parallel geschaltete Regenerationsleitungsabschnitte (32g, 32h; 132g, 132h) aufweist, in einem derer in Reihe zu der Regenerationsdüse ein Schaltmittel (28; 128) angeordnet ist, und
bei dem mittels des Schaltmittels (28; 128) der eine Regenerationsleitungsabschnitt (32h; 132h) bedarfsweisen zu- und abgeschaltet wird,
**dadurch gekennzeichnet, dass** eine Steuereinrichtung (16; 116) das Schaltmittel (28; 128) in Abhängigkeit des Betriebszustandes einer Klimaanlage (5; 105) steuert.

9. Verfahren nach Anspruch 8,
**dadurch gekennzeichnet**,
bei laufender Klimaanlage (5; 105) gekühlte und bei nicht laufender Klimaanlage ungekühlt Luft an einem Klimaanlagenausgang (8; 108) der Klimaanlage bereitstellt wird, wobei zumindest ein Teil der von der Klimaanlage bereitgestellten Luft über einen den Lufttrocknereingang (17; 117) mit dem Klimaanlagenausgang (8; 108) verbindenden Luftpfad (6; 106) als die zu trocknende Luft bereitgestellt wird.

10. Verfahren nach einem der Ansprüche 8 oder 9,
**dadurch gekennzeichnet,**
**dass** eine Sensoreinrichtung (15; 115) dem Betriebszustand der Klimaanlage entsprechende Messwerte erfasst und über eine erste Wirkverbindung (34; 134) als Ausgangssignal (A.1; A.101) an die Steuereinrichtung (16; 116) ausgibt und
**dass** die Steuereinrichtung (16; 116) zur Steuerung des Schaltmittels (28; 128) ein von dem Ausgangssignal (A.1; A.101) abhängiges Steuersignal (S.1; S.101) über eine zweite Wirkverbindung (36; 136) an das Schaltmittel (28; 128) ausgibt.

11. Verfahren nach einem der Ansprüche 8 bis 10,
**dadurch gekennzeichnet, dass** eine zweite (23; 123) an das Luftleitungssystem (32; 132) angeschlossene Trocknungskammer bereitgestellt wird, wobei die beiden Trocknungskammern (22, 23; 122, 123) mittels eines weiteren Schaltmittels (29; 129) wechselweise in eine Trocknungs- und eine Regenerationsphase geschaltet werden.

## Claims

1. Arrangement (3; 103) for drying air, in particular for a compressed air system (4; 104) of a rail vehicle (1; 101), with an air dryer (12; 112) having an air dryer inlet (17; 117) for admitting the air to be dried, at least one drying chamber (22; 122) and an air duct system (32; 132) connected to the drying chamber for conducting air dried by means of the drying chamber, wherein the air duct system has at least two regeneration duct sections (32g, 32h; 132g, 132h) which are each connected in parallel and provided with a regeneration nozzle (30, 31; 130, 131), and in one of which, in series with the regeneration nozzle, a switching means (28, 128) for need-based switching on and off of the one regeneration duct section (32h; 132h) is arranged,
**characterised by**
a control device (16; 116) which is suitably designed to control the switching means (28; 128) as a function of the operating state of an air conditioning system (5; 105).

2. Arrangement (3; 103) according to claim 1,
**characterised in that**
an air conditioning system outlet (8; 108) of the air conditioning system, at which air is provided which when the air conditioning system is running is cooled and when the air conditioning system is not running is uncooled, is connected to the air dryer inlet (17; 117) via an air path (6; 106) such that at least a part of the air provided by the air conditioning system constitutes the air to be dried.

3. Arrangement (3; 103) according to one of claims 1 or 2,
**characterised in that**
a sensor device (15; 115) is suitably designed to detect measured values corresponding to the operating state of the air conditioning system and to output them as an output signal (A.1; A.101) to the control device (16; 116) via a first operative connection (34; 134), and that the control device (16; 116) is suitably designed, for controlling the switching means (28; 128), to output a control signal (S.1; S.101) dependent on the output signal (A.1; A.101) to the switching means (28; 128) via a second operative connection (36; 136).

4. Arrangement (3; 103) according to one of claims 1 to 3,
**characterised in that**
the air duct system (32; 132) is connected to a second drying chamber (23; 123), wherein the two drying chambers (22, 13; 122, 123) can optionally alternately be switched to a drying and a regeneration phase by means of a further switching means (29; 129).

5. Arrangement (3; 103) according to one of claims 3 or 4,
**characterised in that**
the control device (16; 116) determines the control signal (S.1; S.101) based on the output signal (A.1; A.101) by means of a computer-based evaluation logic (37; 137).

6. Arrangement (3; 103) according to one of claims 3 to 5,
**characterised in that**
the sensor device (15; 115) has at least one sensor (39; 139) detecting the operating state of the air conditioning system (5; 105).

7. Rail vehicle (1; 101) having an arrangement (3; 103) for drying air,
**characterised in that**
the arrangement (3; 103) is designed according to one of claims 1 to 6.

8. Method for drying air, in particular for use in a compressed air system (4; 104) of a rail vehicle (1; 101),
in which an air dryer (12; 112) is provided which has an air dryer inlet (17; 117) for admitting the air to be dried, at least one drying chamber (22; 122) and an air duct system (32; 132) connected to the drying chamber for conducting air dried by means of the drying chamber, wherein the air duct system has at least two regeneration duct sections (32g, 32h; 132g, 132h) which are each connected in parallel and provided with a regeneration nozzle (30, 31; 130, 131), and in one of which, in series with the regeneration nozzle, a switching means (28, 128) is arranged, and
in which the one regeneration duct section (32h; 132h) is switched on and off as need be by means of the switching means (28; 128),
**characterised in that**
a control device (16; 116) controls the switching means (28; 128) as a function of the operating state of an air conditioning system (5; 105).

9. Method according to claim 8,
**characterised in that**
when the air conditioning system (5; 105) is running cooled air is provided to an air conditioning system outlet (8; 108) of the air conditioning system and when the air conditioning system (5; 105) is not running uncooled air is provided to an air conditioning system outlet (8; 108) of the air conditioning system, wherein at least a part of the air provided by the air conditioning system is provided as the air to be dried via an air path (6; 106) connecting the air dryer inlet (17; 117) to the air conditioning system outlet (8; 108).

10. Method according to one of claims 8 or 9,
**characterised in that**
a sensor device (15; 115) detects measured values corresponding to the operating state of the air conditioning system and outputs them as an output signal (A.1; A.101) to the control device (16; 116) via a first operative connection (34; 134), and
that the control device (16; 116) for controlling the switching means (28; 128) outputs a control signal (S.1; S.101) dependent on the output signal (A.1; A.101) to the switching means (28; 128) via a second operative connection (36; 136).

11. Method according to one of claims 8 to 10,
**characterised in that**
a second drying chamber (23; 123) connected to the air duct system (32; 132) is provided, wherein the two drying chambers (22, 23; 122, 123) are optionally alternately switched to a drying and a regeneration phase by means of a further switching means (29; 129).

## Revendications

1. Dispositif ( 3 ; 103 ) de séchage d'air, notamment pour une installation ( 4 ; 104 ) d'air comprimé d'un véhicule ( 1 ; 101 ) ferroviaire,
comprenant un sécheur ( 12 ; 112 ) d'air, qui a une entrée ( 17 ; 117 ) de réception de l'air à sécher, au moins une chambre ( 22 ; 122 ) de séchage et un système ( 32 ; 132 ) de conduite d'air raccordé à la chambre de séchage, pour conduire de l'air séché au moyen de la chambre de séchage, le système de conduite d'air ayant au moins deux tronçons ( 32g, 32h ; 132g, 132h ) de conduit de régénération montés en parallèle et pourvus respectivement d'une buse ( 30, 31 ; 130, 131 ) de régénération, dans l'un desquels est monté en série avec la buse de régénération, un moyen ( 28 ; 128 ) de commutation pour brancher et débrancher, suivant les besoins, le un tronçon ( 32h ; 132h ) de conduit de régénération,
**caractérisé par**
un dispositif ( 16 ; 116 ) de commande propre à commander le moyen ( 28 ; 128 ) de commutation en fonction de l'état de fonctionnement d'une installation ( 5 ; 105 ) de climatisation.

2. Dispositif ( 3 ; 103 ) suivant la revendication 1,
**caractérisé en ce qu'**
une sortie ( 8 ; 108 ) de l'installation de climatisation, à laquelle est mis à disposition de l'air, qui est refroidi lorsque l'installation de climatisation fonctionne et qui ne l'est pas lorsque l'installation de climatisation ne fonctionne pas, est reliée par un trajet ( 6 ; 106 ) pour de l'air à l'entrée ( 17 ; 117 ) de séchage d'air, de manière à ce qu'au moins une partie de l'air mis à disposition de l'installation de climatisation forme l'air à sécher.

3. Dispositif ( 3 ; 103 ) suivant l'une des revendications 1 ou 2,
**caractérisé en ce qu'**
un dispositif ( 15 ; 115 ) de capteur est propre à détecter des valeurs de mesure correspondant à l'état de fonctionnement de l'installation de climatisation et à émettre, par une liaison ( 34 ; 134 ) d'action, un signal ( A.1. A.101 ) de sortie vers le dispositif ( 16 ; 116 ) de commande et **en ce que** le dispositif ( 16 ; 116 ) de commande est propre à émettre, pour la commande du moyen ( 28 ; 128 ) de commutation, un signal de commande dépendant du signal ( A.1 ; A.101 ) de sortie vers le moyen ( 28 ; 128 ) de commutation, par l'intermédiaire d'une deuxième liaison ( 36 ; 136 ) d'action.

4. Dispositif ( 3 ; 103 ) suivant l'une des revendications 1 à 3,
**caractérisé en ce que**
le système ( 32 ; 132 ) de conduit d'air est raccordé à une deuxième chambre ( 23 ; 123 ) de séchage, les deux chambres ( 22, 13 ; 122, 123 ) pouvant, au moyen d'un autre moyen ( 29 ; 129 ) de commutation, être commutées en alternance en une phase de séchage et en une phase de régénération.

5. Dispositif ( 3 ; 103 ) suivant l'une des revendications 3 ou 4,
**caractérisé en ce que**
le dispositif ( 16 ; 116 ) de commande détermine le signal ( 5.1. ; S.101 ) de commande à l'aide du signal ( A.1 ; A.101 ) de sortie, au moyen d'une logique ( 37 ; 137 ) d'exploitation informatique.

6. Dispositif ( 3 ; 103 ) suivant l'une des revendications 3 à 5,
**caractérisé en ce que**
le dispositif ( 15 ; 115 ) de capteurs a au moins un capteur ( 39 ; 139 ) détectant l'état de fonctionnement de l'installation ( 5 ; 105 ) de climatisation.

7. Véhicule ( 1 ; 101 ) ferroviaire ayant un dispositif ( 3 ; 103 ) de séchage d'air,
**caractérisé en ce que**
le dispositif ( 3 ; 103 ) est constitué suivant l'une des revendications 1 à 6.

8. Procédé de séchage de l'air, à utiliser notamment dans une installation ( 4 ; 104 ) de séchage d'air d'un véhicule ( 1 ; 101 ) ferroviaire,
dans lequel on se procure un sécheur ( 12 ; 112 ) d'air, qui a une entrée ( 17 ; 117 ) de réception de l'air à sécher, au moins une chambre ( 22 ; 122 ) de séchage et un système ( 32 ; 132 ) de conduite d'air raccordé à la chambre de séchage pour conduire de l'air séché au moyen de la chambre de séchage, le système de conduite d'air ayant au moins deux tronçons ( 32g, 32h ; 132g, 132h ) de conduit de régénération montés en parallèle et pourvus respectivement d'une buse ( 30, 31 ; 130, 131 ) de régénération, dans l'un desquels un moyen ( 28 ; 128 ) de commutation est monté en série avec la buse de régénération et
dans lequel on branche et on débranche, suivant les besoins, le un tronçon ( 32h ; 132h ) de conduit de régénération au moyen du moyen ( 28 ; 128 ) de commutation,
**caractérisé en ce qu'**
un dispositif ( 16 ; 116 ) de commande commande le moyen ( 28 ; 128 ) de commutation en fonction de l'état de fonctionnement d'une installation ( 5 ; 105 ) de climatisation.

9. Procédé suivant la revendication 8,
**caractérisé en ce que**
on met à disposition, à la sortie ( 8 ; 108 ) de l'installation de climatisation, de l'air refroidi, lorsque l'installation ( 5 ; 105 ) de climatisation fonctionne, et de l'air non refroidi, lorsqu'elle ne fonctionne pas, au moins une partie de l'air mis à disposition de l'installation de climatisation étant mise à disposition, comme l'air à sécher, par un trajet ( 6 ; 106 ) d'air reliant l'entrée ( 17 ; 117 ) du sécheur d'air à la sortie ( 8 ; 108 ) de l'installation de climatisation.

10. Procédé suivant l'une des revendications 8 ou 9,
**caractérisé en ce qu'**
un dispositif ( 15 ; 115 ) de capteur détecte des valeurs de mesure correspondant à l'état de fonctionnement de l'installation de communication et les émet vers le dispositif ( 16 ; 116 ) de commande comme signal ( A.1. A.101 ) de sortie par une première liaison ( 34 ; 134 ) d'action et
**en ce que** le dispositif ( 16 ; 116 ) de commande émet, pour commander le moyen ( 28 ; 128 ) de commutation vers le moyen ( 28 ; 128 ) de commutation, par l'intermédiaire d'une deuxième liaison ( 36 ; 136 ) d'action, un signal ( S.1 ; S.101 ) qui dépend du signal ( A.1 ; A.101 ) de sortie.

11. Procédé suivant l'une des revendications 8 à 10,
**caractérisé en ce qu'**
on se procure une deuxième chambre de séchage raccordée au système ( 32 ; 132 ) de conduite d'air, les deux chambres ( 22, 23 ; 122, 123 ) de séchage étant commutées au moyen d'un autre moyen ( 29 ; 129 ) de commutation, en alternance, en une phase de séchage vers une phase de régénération.
